# EUROPEAN PATENT APPLICATION

(11) **EP 1 935 701 A2**
(43) Date of publication of application: **25.06.2008**
(21) Application number: 07008396.9
(22) Date of filing: 11.05.2007
(51) Int. Cl.: B60K 15/04

(54) **Fuel tank lock assembly**

(30) Priority: 18.12.2006 US 640191
(71) Applicant: Les Aciers Robond Inc., Magog QC J1X 5P2 (CA)
(72) Inventor: Bisaillon, Gerard, Magog Quebec J1X 4W3 (CA)
(74) Representative: Jackson, Derek Charles

(57) **Abstract**

A lock assembly for use in a fuel tank filling neck includes a body (1,45) for insertion into the neck; a cylindrical lock (11,65) and a plunger (12, 85) beneath the lock (11, 65) slidable and lockable in one position in the body (1, 45) ; and a cam (31,102) on the bottom end of the plunger (12,85) for pushing latches (37,105) outwardly against the bottom of the filling neck to prevent removal of the assembly from the filling neck.

## Description

### BACKGROUND OF THE INVENTION

### FIELD OF THE INVENTION

This invention relates to a fuel tank lock assembly.

There is a real problem with fuel theft in the trucking industry. With the ever increasing price of fuel, it is getting more and more expensive to fill up a vehicle. A fill-up for a large truck can cost several hundred dollars. When vehicles are left unattended, fuel theft is becoming increasingly more common.

### DISCUSSION OF THE PRIOR ART

A search in the patent literature discloses a large number of patents relating to lockable covers and other lock systems for vehicle fuel tanks. In this connection, reference is made to US Patents Nos. 1,499,629 (Arnold), 1,624,840 (Malluk), 1,839,423 (Stone), 1,902,456 (Matthews), 1,944,535 (White), 2,345,809 (Greenberg), 2,373,470 (Hanke), 3,930,388 (Barras), 3,998,353 (Farelli), 4,317,345 (Hinson), 5,658,036 (Benoist) and 6,755,057 (Foltz). Many of the available lock devices are accessible from outside of the fuel tank on which they are mounted. Others of the devices are somewhat complicated and/or can be used only on a fuel filling neck designed specifically for such devices.

A need exists for a lock assembly for a conventional, externally threaded fuel tank filling neck which cannot easily be tampered with even using a full set of tools.

### GENERAL DESCRIPTION OF THE INVENTION

An object of the present invention is to meet the above defined need by providing a relatively simple, durable lock assembly for a fuel tank filling neck which is not readily accessible to a would be thief.

Accordingly, the invention relates to a fuel tank lock assembly for sealing a vehicle fuel filling neck having open top and bottom ends comprising:
tubular barrel means for mounting in said neck, said barrel means being adapted to close said neck and having a length similar to the length of the neck;
seal means for sealing the barrel means in the tube;
lock means slidable in said barrel means between a release position in which the barrel means can be removed from the neck and a locked position in which the barrel is locked in a neck sealing position;
latch means movable on a bottom end of said barrel means between a locked position in engagement with the filling neck to lock the barrel means in the neck, and a release position permitting removal of said barrel means from the neck;
plunger means slidable in said barrel means engageable by said lock means for movement with said lock means between the release and locked positions; and
cam means on a bottom end of said plunger means for moving said latch means from the release position in which the barrel means can be removed from the filling neck and the locked position in which the barrel means is locked in the neck.

### BRIEF DESCRIPTION OF THE DRAWINGS

Preferred embodiment of the invention are described in detail below with reference to the accompanying drawings, wherein:
Figure 1 is an isometric view of a fuel tank filling neck containing a preferred embodiment of a lock assembly in accordance with the invention;
Figure 2 is an isometric view of the lock assembly of Fig. 1 as seen from above;
Figure 3 is a an isometric view of the lock assembly of Fig. 1 as seen from below;
Figure 4 is a side view of the lock assembly of Figs. 1 to 3;
Figure 5 is an exploded, isometric view of the lock assembly of Figs. 1 to 4;
Figure 6 is an isometric view of a bushing used in the lock assembly of Figs. 1 to 5;
Figure 7 is a bottom view of the lock assembly of Figs. 1 to 5;
Figure 8 is a longitudinal sectional view of the lock assembly of Figs. 1 to 5 in a filling neck;
Figure 9 is a cross section taken generally along line 9-9 of Fig. 4;
Figure 10 is an exploded isometric view of the interior of the lock assembly of Figs. 1 to 5, a filling neck and a cap for the filling neck;
Figure 11 is an exploded, isometric view of the elements of Fig. 10 showing the lock assembly in the filling neck;
Figure 12 is a top view of a second embodiment of the lock assembly of the present invention;
Figure 13 is an isometric view of the lock assembly of Fig. 12 as seen from above;
Figure 14 is a side view of the lock assembly of Figs. 12 and 13;
Figure 15 is an exploded, isometric view of the lock assembly of Figs. 12 to 14 with parts omitted;
Figure 16 is a cross section taken generally along line 16-16 of Fig. 12;
Figure 17 is an isometric view of the body of the lock assembly of Figs. 11 to 16 as seen from below;
Figure 18 is a top view of a top plate used in the lock assembly of Figs. 11 to 16;
Figure 19 is a cross section taken generally along line 19-19 of Fig. 18;
Figure 20 is an isometric view of the top plate of Fig. 19 as seen from below; and
Figure 21 is an isometric view of a metal plate used in the lock assembly of Figs. 11 to 16.

### DESCRIPTION OF THE PREFERRED EMBODIMENTS

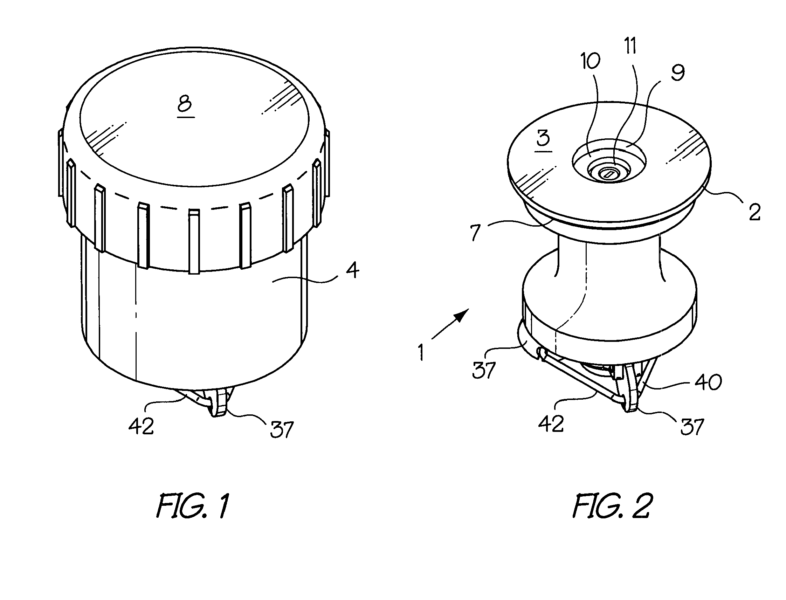

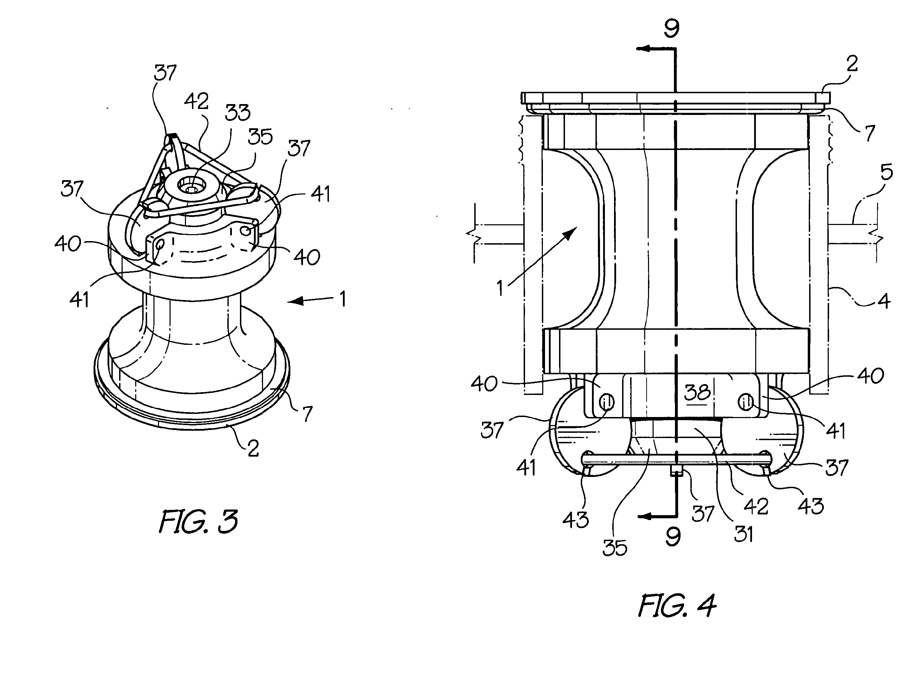

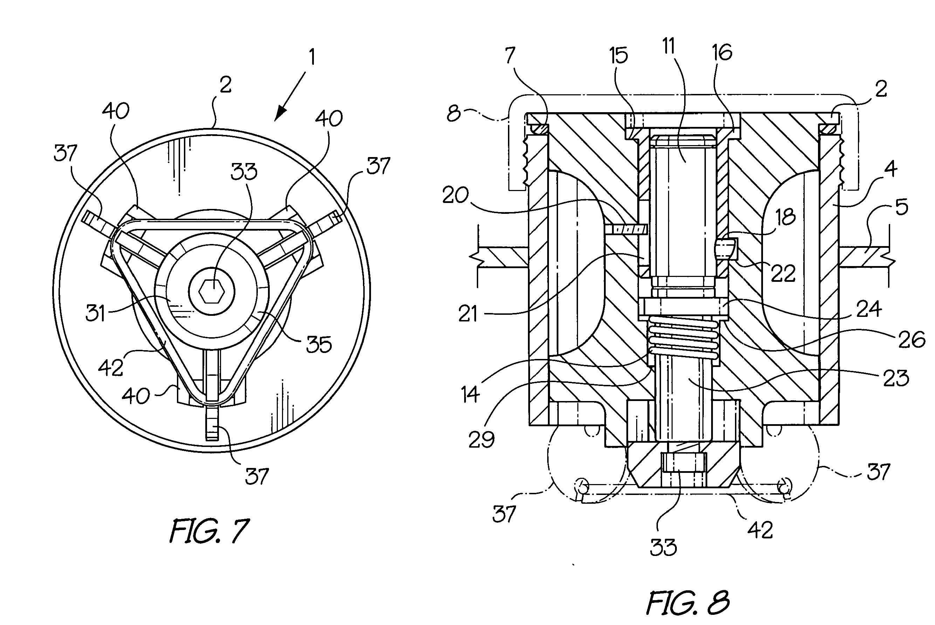

Referring to Figs. 1 to 11 of the drawings, a preferred embodiment of the fuel tank lock assembly includes a tubular barrel indicated generally at 1 with an annular flange 2 extending outwardly from the top end 3 thereof. The barrel 1 is placed in the filling neck 4 (Figs. 1, 4 and 8) of a fuel tank 5 (only a portion of which is shown in Figs. 4, 8 and 9). An annular seal 7 on the bottom of the flange 2 rests on the top end of the neck 4 to seal the barrel 1 in the neck. When an internally threaded cap 8 is screwed onto the externally threaded top end of neck 4, a seal is created between the flange 2 and the neck 4.

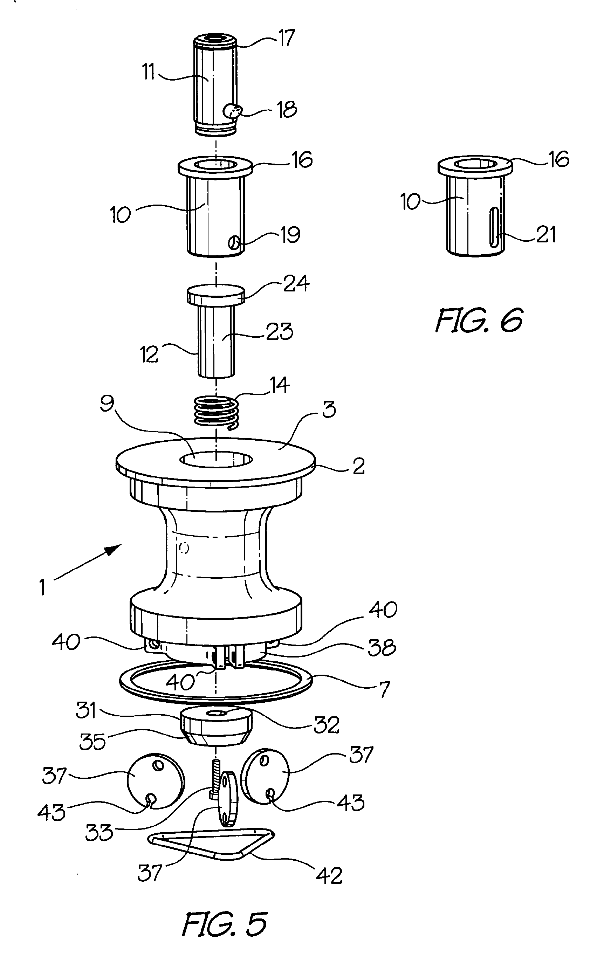

A longitudinally extending passage 9 (Fig. 5) in the barrel 1 houses a cylindrical bushing 10 containing a cylindrical lock 11, a two-piece plunger 12 and a helical spring 14. A stop in the form of a shoulder 15 near the top end of the passage 9 and an annular flange 16 on the top end of the bushing 10 limit downward movement of the bushing in the body 1. The lock 11 includes a sealing ring 17 and a radially outwardly extending bolt 18.

In an unlock or release position, the bolt 18 extends into a hole 19 in the bushing 10 (Fig. 6) but, in the release position, does not extend beyond the periphery of the bushing. Thus, the bushing 10 is free to slide vertically in the body 1. A pin or screw 20 in the barrel 1 extends into a longitudinally extending slot 21 in the bushing 10 to prevent rotation of the bushing in the barrel. The slot is diametrically opposed to the hole 19. In a locked position, the bolt 18 extends into a recess 22 in the wall of the passage.

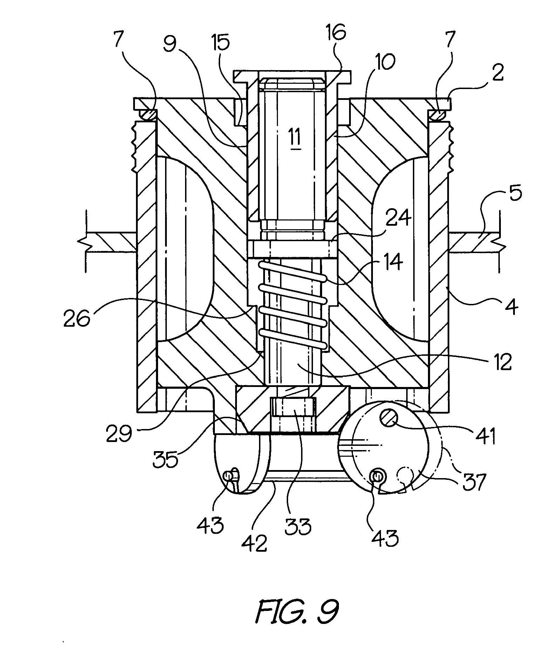

When the lock 11 and the bushing 10 are pushed down in the passage 9, the lock engages the upper end of the top portion 23 of the plunger 12 to move downwardly. Downward movement of the plunger 12 is stopped when an annular flange 24 on the top end of the plunger encounters a second shoulder stop 26 in the passage 9. During downward movement, the flange 24 compresses a spring 14 around the plunger 12 against a third shoulder 29 in the passage 9. When the bushing 10 is unlocked, the spring 14 returns the bushing 10, the lock 11 and the plunger 12 to rest position (Fig. 9). The bottom end of the plunger 12 is defined by a cylindrical cam 31, which includes a countersunk threaded hole 32 in the center thereof for receiving a screw 33 for connecting the cam 31 to the remainder thereof.

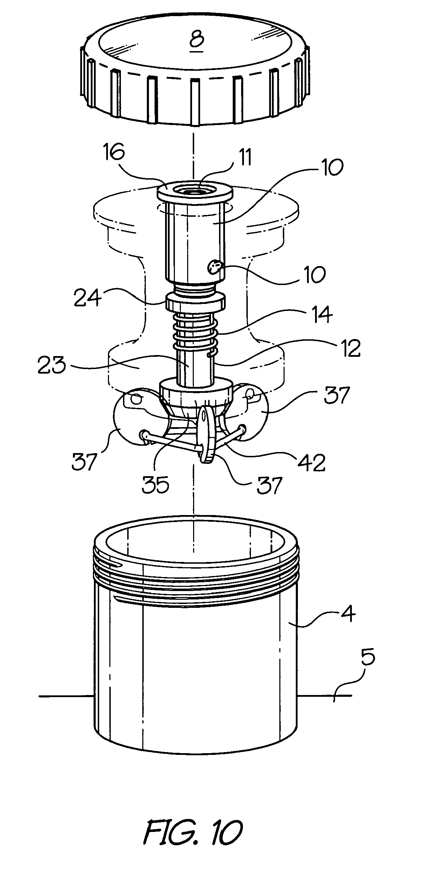

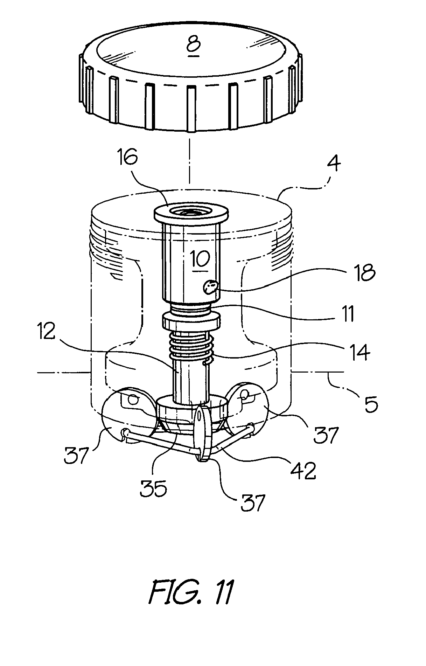

The bottom 35 of the cam 31 is beveled, i.e. tapers downwardly. The tapered bottom end 35 of the cam 31 engages three latching discs 37, which are pivotally connected to the bottom end 38 of the barrel 1. For such purpose, the cylindrical bottom end 38 of the barrel includes three radially outwardly extending clevises 40 spaced equidistant apart at 120° to each other. Pins 41 pivotally connnect one side of the discs 37 to the clevises 40. A resilient band 42 extending through keyhole notches 43 in the sides of the discs 37 diametrically opposed to the pins 41 biases the discs to inner or release positions (shown in solid lines in Fig. 9 and Figs. 10). When the plunger 12 is pushed downwardly the cam 31 causes the discs 37 to rotate outwardly to a latching position (shown in phantom outline in Fig. 9 and in Fig. 11) in which they engage the bottom end of the filling neck 4.

With reference to Figs. 10 and 11, the operation of the lock assembly will now be summarized. With the bushing 10, the lock 11 and the plunger 12 in the upper, release position (Fig. 10), the lock assembly is inserted into the open top end of a filling neck 4 until the seal 7 presses against the top of the neck. The bushing 10 and the lock 11 are pushed downwardly in the barrel 1 using a key (not shown) which moves the plunger 12 downwardly against the bias of the spring 14. During such movement of the plunger 12 the cam 31 pushes the discs 37 outwardly to the latching position where they engage the bottom edge of the neck 4, thus locking the lock assembly in the neck 4. When the discs 37 are in the latching position, the key is turned in the lock 11 to extend the bolt 18 into the recess 22 in the side wall of the passage 9. Thus, the barrel 1 is latched in the filling neck 4. When an acid resistant lock 11 is used in the assembly, it is virtually impossible to remove the assembly from the neck 4 without the key.

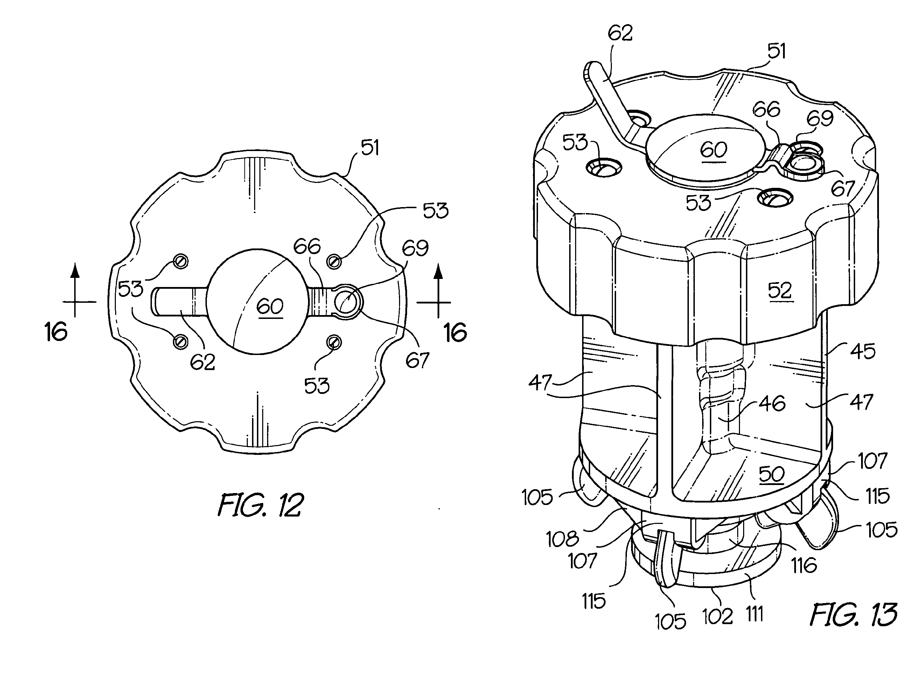

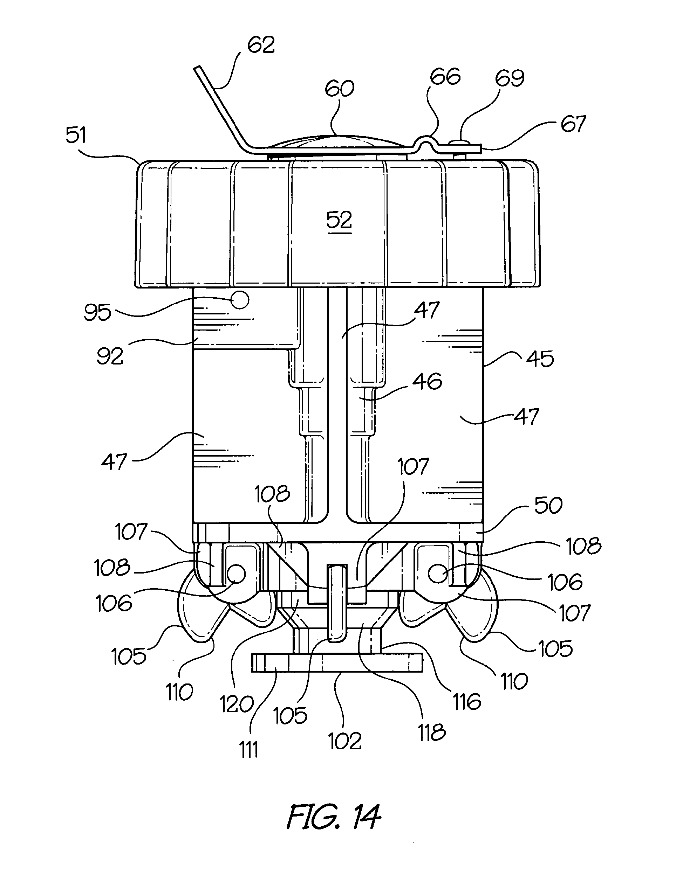

With reference to Figs. 12 to 21, a second embodiment of the lock assembly includes a tubular plastic body 45 of generally cruciform cross section containing a barrel 46 at the center thereof. Rectangular ribs 47 extend radially outwardly from the barrel 46. Circular top and bottom ends 49 and 50 integral with the barrel 46 and the ribs 47 complete the main part of the body 45. In this version of the lock assembly, a cap 51 with an internally threaded, cylindrical side 52 is permanently attached to the body 45 by screws 53 which extend downwardly through holes 54 in the cap into aligned threaded holes 55 (Fig. 11) in the top end 49 of the body.

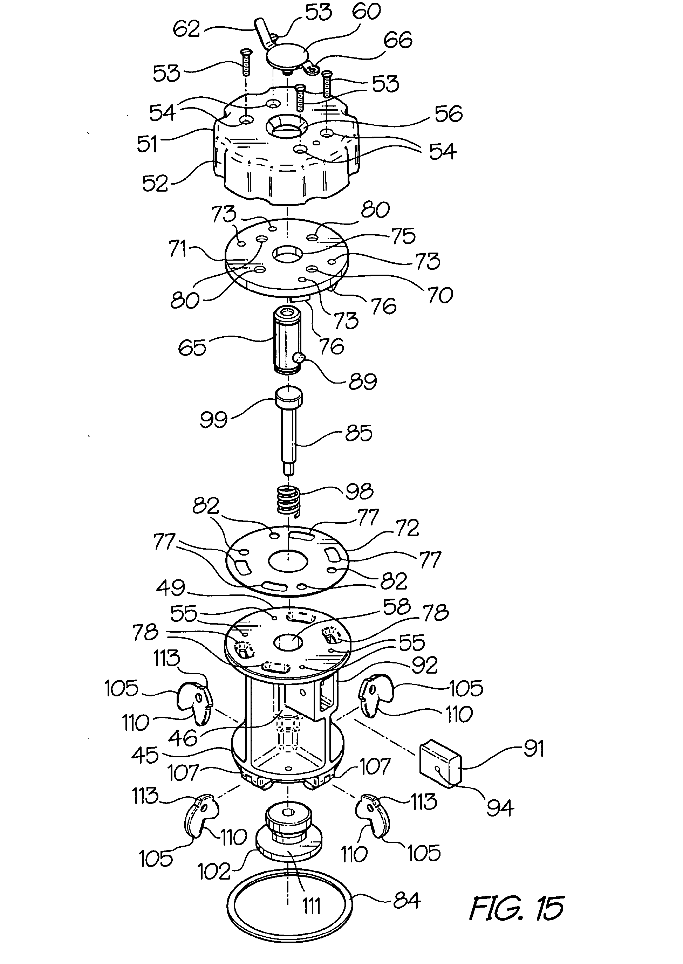

A central hole 56 (Fig. 15) in the cap 51 permits access to a longitudinally extending passage 58 in the body 45. The hole 56 is normally closed by a flexible plastic cover 60, which includes a tapered body 61 with a pull tab 62 on one side thereof, and a split, cylindrical bottom end 63 for frictional engagement with a recess in the top end of a lock 65 in the passage 58. A strip 66 extending outwardly from the side of the body 61 opposite the tab 62 acts as a hinge. The circular outer end 67 of the strip 66 is connected to the cap 51 by a snap pin 69 which extends through the cap 51 into a hole 70 in a circular, plastic top plate 71.

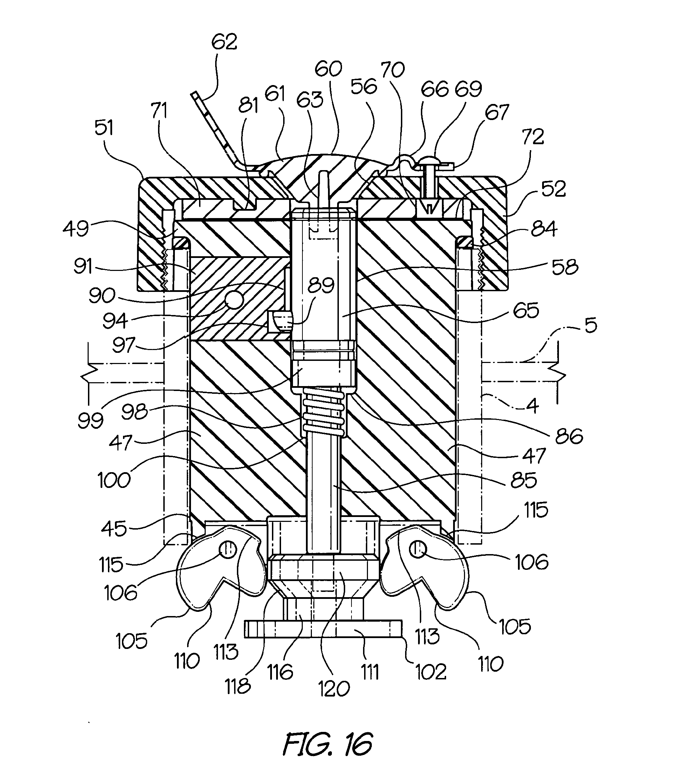

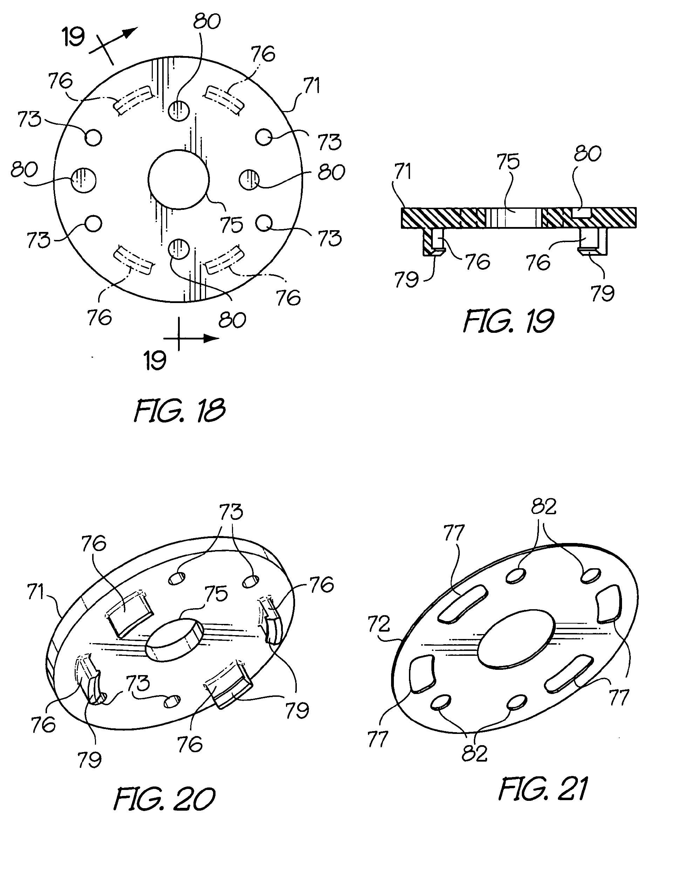

The top plate 71 and a metal plate 72 are sandwiched between the top end of the body 45 and the cap 51. As shown in Figs. 18 to 20, the top plate 71 includes four holes 73 for receiving the screws 53. Two of the screws 53 are attached to the top end 49 of the body 45. The other two screws 53 extend through the top end of the body to locations between the ribs 47 into lock nuts (not shown), which prevent removal of the cap 51 even if the remaining two screws are removed. The plate 71 also includes a central hole 75 permitting access to the passage 58 in the barrel 46. Hook-shaped tabs 76 extend downwardly from the plate 71 through aligned arcuate slots 77 and 78 in the plate 72 and in the top end 49 of the body 45. The slots 78 are smaller in width than the bottom, hook ends 79 of the tabs 76, so that the tabs snap into the slot, locking the top plate 71 to the body 45. Recesses 80 in the top of the plate 71 receive projections 81 (one shown - Fig. 16) extending downwardly from the top of the cap 51 for facilitating proper positioning of the cap on the plate 71 and preventing rotation of the cap relative to the plate 71. The metal plate 72 prevents access to the body of the lock assembly by drilling through the cap 51 and the top plate 71. The plate 72 includes the slots 77 referred to above and holes 82 for the screws 53.

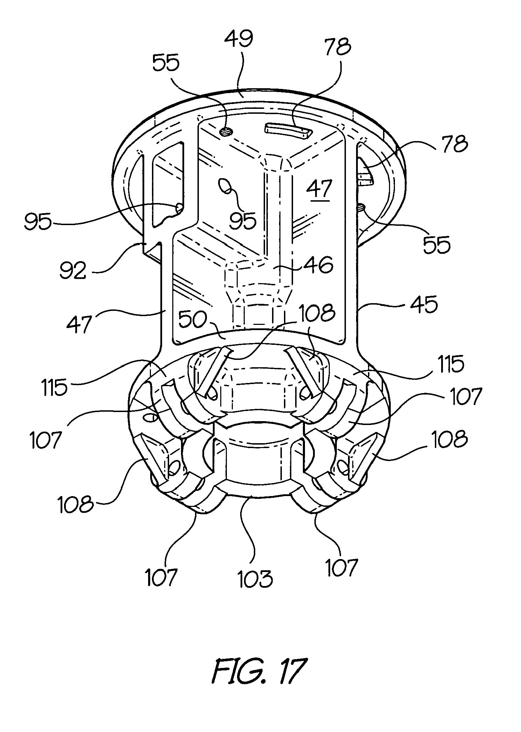

As best shown in Figs. 16 and 17, the circular top end 49 of the body 45 extends outwardly beyond the outer edges of the ribs 47. An O-ring 84 (Figs. 15 and 16) beneath the periphery of the top end 49 seals the lock assembly in the filling neck 4 of a fuel tank 5.

As in the case of the first embodiment of the invention, the passage 58 in the barrel 46 slidably receives the lock 65 and a plunger 85. Downward movement of the lock 65 and of the plunger 85 are limited by a shoulder 86. The bolt 89 of the lock 65 is slidable in a vertical groove 90 in a metal insert 91. The insert 91 is mounted in a tubular socket 92 (Fig. 17) at the top end of one of the ribs 47. The insert 91 retained in the socket 92 by a spring pin (not shown) which passes through aligned holes 94 and 95 in the insert 91 and in the socket 92, respectively.

In the unlocked position, the bolt 89 of the lock 65 is retracted and free to slide in the groove 90. In the locked position, the bolt 89 enters a socket 97 at the bottom of the groove 90. When the lock 65 is pushed downwardly using a key (not shown), a helical spring 98 beneath the head 99 of the plunger 85 is compressed against a shoulder 100. When the lock 65 is unlocked, the spring 98 returns the plunger 85 and the lock 65 to upper, unlocked or release position.

A generally cylindrical cam 102 mounted on the bottom end of the plunger 85 is slidable in the cylindrical bottom end 103 (Fig. 17) of the body 45. The cam 102 is adapted to rotate four latches 105 in the shape of disc segments between locked and unlocked positions when the plunger 85 is moved vertically. The latches 105 are pivotally mounted on pins 106 in clevises 107, which extend radially outwardly from the bottom end 103 at 90° to each other. The clevises 107 are reinforced by triangular gussets 108.

Each latch 105 includes a notch 110 on the inner side thereof. The top edge of the notch 110 normally rests on a circular bottom ledge 111 of the cam 102. A projection 113 on the top, outer edge of the latch 105 is engaged by a ramp 115 (Figs. 13 and 16) between the sides of the clevis 107 carrying the latch to force the inner edge of the latch into a recess 116 in the cam 102 above the ledge 111. During downward movement of the plunger 85 and cam 102, an inclined shoulder 118 above the recess 116 engages inner edge of the latch 105 to cause the latter to rotate outwardly to the locked position in which it engages the bottom end of the filling neck 4 (Fig. 16). In the locked position, the top inner edge of the latch 105 engages the cylindrical head 120 of the cam 102.

## Claims

1. A fuel tank lock assembly for sealing a vehicle fuel filling neck having open top and bottom ends comprising:
tubular barrel means (1,46) for mounting in said neck, said barrel means (1,46) being adapted to close said neck and having a length similar to the length of the neck;
seal means (7,84) for sealing the barrel means (1,46) in the tube;
lock means (11,65) slidable in said barrel means (1,46) between a release position in which the barrel means (1,46) can be removed from the neck and a locked position in which the barrel means (1,46) is locked in a neck sealing position;
latch means (37,105) movable on a bottom end of said barrel means (1,46) between a locked position in engagement with the filling neck to lock the barrel means (1,46) in the neck, and a release position permitting removal of said barrel means (1,46) from the neck;
plunger means (12,85) slidable in said barrel means (1,46) engageable by said lock means (11,65) for movement with said lock means (11,65) between the release and locked positions; and
cam means (31,102) on a bottom end of said plunger means (12,85) for moving said latch means (37,105) from the release position in which the barrel means (1,46) can be removed from the filling neck and the locked position in which the barrel means (1,46) is locked in the neck.

2. The lock assembly of claim 1, wherein said latch means (37,105) include a plurality of discs (37,105) pivotally mounted on the bottom end of the barrel means (1, 46) for rotation between the locked position against a bottom edge of the filling neck and the release position.

3. The lock assembly of claim 2, wherein said latch means (37,105) includes a resilient band (42,84) interconnecting said discs (37,105) for biasing said discs (37,105) to the release position.

4. The lock assembly of claim 1 including spring means (14,98) in said barrel means (1,46) for returning said lock means (11,65), plunger means (12,85) and cam means (31, 02) from the locked position to the release position.

5. The lock assembly of claim 4 including stop means (15,23, 29, 86,100) in said barrel means (1,46) for limiting movement of said lock means (11,65), plunger means (12,85) and cam means (31,102) from the release to the locked position.

6. The lock assembly of claim 4, including bushing means (10) carrying said lock means (11), said bushing means (10) being slidable in said barrel means (1) for movement between said release and locked positions.

7. The lock assembly of claim 1 including a cap (51) connected to a top end of said barrel means (46) for connecting the barrel means (46) to a top end of the fuel filling neck.

8. The lock assembly of claim 7 including a top plate (71) connected to the top of said barrel (46) beneath said cap (51); and a metal plate (72) sandwiched between said top plate (71) and said barrel (46).

9. The lock assembly of claim 7, wherein said barrel (46) is formed of plastic.

10. The lock assembly of claim 9, including a metal insert (91) in said barrel (46) for receiving a bolt (89) of said lock means (65).

11. The lock assembly of claim 10 including a groove (90) in said insert (91) for slidably receiving the lock bolt (89), and a recess (97) at a bottom end of said groove (90) for receiving the lock bolt (89) in the locked position.
